# EUROPÄISCHE PATENTSCHRIFT

(11) **EP 1 890 100 B1**
(45) Veröffentlichungstag und Bekanntmachung des Hinweises auf die Patenterteilung: **13.06.2018**
(21) Anmeldenummer: 07013228.7
(22) Anmeldetag: 06.07.2007
(51) Int. Cl.: F25J 3/04, B01D 5/00, F28D 9/00, F28B 9/00, F25J 3/00

(54) **Rücklaufkondensator**
Dephlegmator
Déphlegmateur

(30) Priorität: 08.08.2006 DE 102006037058; 17.11.2006 EP 06023934
(43) Veröffentlichungstag der Anmeldung: 20.02.2008
(73) Patentinhaber: Linde AG, 80331 München (DE)
(72) Erfinder: Hecht, Thomas, 82131 Gauting (DE); Schuhbeck, Sepp, 84550 Feichten (DE)
(74) Vertreter: Imhof, Dietmar

(56) Entgegenhaltungen:
- FR-A1- 2 431 103
- FR-A1- 2 798 599
- US-A- 3 720 071
- US-A- 4 124 069
- US-A- 5 730 002
- US-B1- 6 349 566

## Beschreibung

Die Erfindung betrifft einen Rücklaufkondensator.

Es sind zwei grundlegende Bauformen von Rücklaufkondensatoren bekannt. Entweder der Wärmetauscherblock (oder auch eine Mehrzahl von Wärmetauscherblöcken) ist im Inneren eines Druckbehälters angeordnet, wie dies zum Beispiel in EP 1189000 A2 dargestellt ist, oder der Wärmetauscherblock ist auf allen Seiten durch Header abgeschlossen, siehe zum Beispiel US 6128920. Die vorliegende Erfindung bezieht sich auf die erste Variante.

Dokument FR 2431103 A1 zeigt einen Rücklaufkondensator mit einem in einem Druckbehälter angeordneten Wärmetauscherblock. Die Rücklaufpassagen eines Rücklaufkondensators werden von unten mit Dampf beaufschlagt. Dieser kondensiert beim Aufsteigen in den Rücklaufpassagen teilweise. Die Rücklaufpassagen sind dabei so konstruiert, dass die kondensierte Flüssigkeit nicht mitgerissen wird, sondern nach unten fließt. Durch den Gegenstrom von Dampf und Flüssigkeit findet in den Rücklaufpassagen eine Rektifikation statt. Die Flüssigkeit, die am unteren Ende austritt, ist an schwererflüchtigen Komponenten angereichert, der oben austretende Dampf an leichterflüchtigen.

Ein Rücklaufkondensator (auch Dephlegmator genannt) kann als allein stehende Trenneinheit verwendet werden. Alternativ wird er als Kopfkondensator einer Trennkolonne eingesetzt und verstärkt deren Trennwirkung.

Räumliche Begriffe wie "oben", "unten", "seitlich" etc. beziehen sich hier immer auf die Orientierung des Rücklaufkondensators im bestimmungsgemäßen Betrieb.

Der Erfindung liegt daher die Aufgabe zugrunde, die Wirtschaftlichkeit eines Rücklaufkondensators der eingangs genannten Art zu verbessern und insbesondere günstige Herstellungs- und/oder Betriebskosten zu erreichen.

Diese Aufgabe wird dadurch gelöst, dass die Rücklaufpassagen an ihrem unteren Ende mit einem Header kommunizieren, der unterhalb des Wärmetauscherblocks angeordnet ist und eine Phasentrenneinrichtung aufweist.

Dieser Header stellt mindestens einen Teil der Mittel zum Einführen von Dampf in den unteren Bereich der Rücklaufpassagen und der Mittel zum Abführen von Flüssigkeit aus dem unteren Bereich der Rücklaufpassagen dar.

Obwohl der Wärmetauscherblock des erfindungsgemäßen Rücklaufkondensators im Inneren eines Druckbehälters installiert ist, sind seine Rücklaufpassagen nicht offen zum Zwischenraum zwischen Druckbehälter und Wärmetauscherblock, sondern weisen einen Header auf. Dies erscheint zunächst übertrieben aufwändig, hat aber den Vorteil, dass in dem Header eine Phasentrenneinrichtung angeordnet werden kann, die es ermöglicht, dass Dampf und Flüssigkeit unterhalb der Rücklaufpassagen wirksam voneinander getrennt werden können. Damit wird insbesondere verhindert, dass Flüssigkeit von der Dampfströmung mitgerissen wird. Insgesamt wird eine besonders hohe Wirksamkeit des Wärme- und Stoffaustauschvorgangs in dem Rücklaufkondensator erreicht.

Ein weiterer Vorteil der erfindungsgemäßen Konstruktion besteht darin, dass der Innenraum des Druckbehälters, also der Zwischenraum zwischen Druckbehälter und Wärmetauscherblock, für andere Zwecke genutzt werden und auch einen anderen Druck aufweisen kann als die Rücklaufpassagen.

Der Wärmetauscherblock wird vorzugsweise als Plattenwärmetauscher gefertigt, insbesondere als gelöteter Aluminium-Plattenwärmetauscher.

Es ist günstig, wenn die im Header angeordnete Phasentrenneinrichtung einen Boden aufweist. Damit wird die aus den Rücklaufpassagen austretende Flüssigkeit auf dem Boden gesammelt.

In einer weiteren Ausgestaltung der Erfindung enthält der Boden mindestens eine Gasdurchtrittsöffnung und die Gasdurchtrittsöffnung ist an ihrer Oberseite mit einer Umrandung zum Aufstauen von Flüssigkeit versehen. Der aufsteigende und später in die Rücklaufpassagen eintretende Dampf strömt über die Gasdurchtrittsöffnung an der aufgestauten Flüssigkeit vorbei, ohne einen wesentlichen Druckverlust zu erleiden und ohne dabei Flüssigkeitströpfchen mitzureißen. Die Umrandung verhindert, dass Flüssigkeit in die Gasdurchtrittsöffnung einfließt.

Die Umrandung der Gasdurchtrittsöffnung kann durch eine oder mehrere vertikale Wände gebildet werden, im einfachsten Fall durch eine zylindermantelförmige Wand mit vertikaler Symmetrieachse. Es sind aber auch andere Formen von Umrandungen denkbar, zum Beispiel solche, die sich nach erweitern oder verjüngen. Die Umrandung ist vorzugsweise unmittelbar am Rand der Gasdurchtrittsöffnung angeordnet, kann aber auch einen gewissen Abstand zum Rand der Gasdurchtrittsöffnung aufweisen.

Die Unterseite der Gasdurchtrittsöffnung kann in Strömungsverbindung mit dem Kopf einer Trennkolonne stehen, sodass deren Kopfgas in die Rücklaufpassagen einströmt.

Die Phasentrenneinrichtung des Wärmetauscherblocks weist zum Beispiel ein bis zehn Gasdurchtrittsöffnungen, vorzugsweise zwei bis sechs Gasdurchtrittsöffnungen auf.

Es ist ferner günstig, wenn der freie Querschnitt der Gasdurchtrittsöffnung beziehungsweise die Summe der freien Querschnitte aller Gasdurchtrittsöffnungen der Phasentrenneinrichtung weniger als 50 %, insbesondere weniger als 30 %, insbesondere weniger als 25 % der unteren Stirnfläche des Wärmetauscherblocks beträgt.

Der Boden der Phasentrenneinrichtung kann grundsätzlich jede Form aufweisen und zum Beispiel gekrümmt sein. Insbesondere dann, wenn an den Druckbehälter unten ein weiterer Druckbehälter anschließt, dessen Querschnitt nicht kleiner als der Querschnitt des Druckbehälters ist, bringt eine Ausführungsvariante Vorteile, bei der eine Bodenplatte eingesetzt wird, die einen zentralen Bereich, der die Grundfläche des Bodens bildet und mit einem peripheren Bereich, der den zentralen Bereich umschließt und den Druckbehälter nach unten abschließt. Die Bodenplatte ist vorzugsweise eben.

In Verbindung mit dem oben erwähnten Merkmal einer relativ geringen freien Querschnittsfläche kann eine besonders hohe Stabilität der Bodenplatte mit relativ geringer Materialdicke erreicht werden.

Vorzugsweise weist die Phasentrenneinrichtung mindestens ein Ablaufrohr für auf dem Boden angestaute Flüssigkeit auf. Über dieses Ablaufrohr wird die auf dem Boden aufgefangene Flüssigkeit getrennt vom eintretenden Dampfstrom abgeführt.

Das Ablaufrohr kann zum Beispiel in Strömungsverbindung mit einem Flüssigkeitsverteiler stehen, der die in den Rücklaufpassagen gebildete Flüssigkeit auf den Stoffaustauschabschnitt einer Trennkolonne verteilt, die geordnete Packung oder Füllkörper enthält. Im Falle einer Bodenkolonne kann das Ablaufrohr auf einen Kolonnenboden münden, vorzugsweise wird die über das Ablaufrohr abfließende Flüssigkeit jedoch in einen Flüssigkeitsverteiler geleitet.

Es ist ferner vorteilhaft, wenn oberhalb der Gasdurchtrittsöffnung eine Abdeckung mit Abstand zum Boden angeordnet ist, die mindestens einen Teil der Querschnittsfläche der Gasdurchtrittsöffnung überdeckt. Auf diese Weise wird verhindert, dass aus den Rücklaufpassagen herabregnende Flüssigkeit in die Gasdurchtrittsöffnung gelangt. Die Abdeckung überdeckt vorzugsweise den gesamten Querschnitt der Gasdurchtrittsöffnung. Der vertikale Abstand zum Boden beziehungsweise zum oberen Ende der Umrandung wird dabei so gewählt, dass der Dampf ohne nennenswerten Druckverlust hindurchströmen kann. Die gesamte Konstruktion kann nach dem Prinzip eines Kaminbodens ausgeführt sein.

Im Rahmen der Erfindung kann dem eintretenden Dampf wesentlich größere Querschnittsfläche geboten werden als bei einem üblichen Header mit Rohranschluss. Vorzugsweise beträgt der Querschnitt der Gasdurchtrittsöffnung der Phasentrenneinrichtung mindestens 5 %, insbesondere mindestens 10 %, insbesondere mindestens 15 %, beispielsweise 15 bis 40 % der unteren Stirnfläche des Wärmetauscherblocks. Falls die Phasentrenneinrichtung mehr als eine Gasdurchtrittsöffnung aufweist, gilt dieses Maß für die Summe der Querschnitte aller Gasd urchtrittsöffnungen.
Der Header kann ebene, insbesondere rechteckige Seitenwände aufweisen, die mit den unteren Kanten des Wärmetauscherblocks verbunden sind. Er kann außerdem einen Boden aufweisen, der auch den Boden der Phasentrenneinrichtung bildet. Zum Beispiel weist er insgesamt die Form eines Quaders auf, dessen obere Stirnfläche durch die untere Stirnfläche des Wärmetauscherblocks gebildet wird. Alternativ kann er auch die Form eines Zylindermantels aufweisen; entsprechende Header-Formen sind in der älteren europäischen Patentanmeldung 05026404 und den dazu korrespondierenden Anmeldungen dargestellt.
Die Mittel zum Einführen von Kältemittel in die Kältemittelpassagen sind als seitliche Öffnungen des Wärmetauscherblocks ausgebildet, über welche die Kältemittelpassagen mit dem Zwischenraum zwischen Druckbehälter und Wärmetauscherblock kommunizieren. Damit kann dieser Zwischenraum für die Heranführung von Kältemittel genutzt werden, ohne dass ein Header zu diesem Zweck benötigt wird. Falls das Kältemittel flüssig eingeführt wird, kann der Zwischenraum zwischen Druckbehälter und Wärmetauscherblock als Flüssigkeitsbad genutzt werden. Die seitlichen Öffnungen sind dann so angeordnet, dass sie im Betrieb des Rücklaufkondensators unterhalb der Flüssigkeitsoberfläche liegen. Sie können an einer oder zwei Seiten des Wärmetauscherblocks angeordnet sein.

Vorzugsweise sind die Kältemittelpassagen außerdem an der Oberseite des Wärmetauscherblocks nach oben offen. Auf diese Weise können die Kältemittelpassagen wie ein gewöhnlicher Umlaufverdampfer (Badverdampfer) mit Hilfe des Thermosiphon-Effekts betrieben werden, ohne dass auf der Kältemittelseite Header benötigt werden. Der Wärmetauscherblock weist dann außer dem beschriebenen Header für die Rücklaufpassagen am unteren Ende nur noch einen weiteren Header auf, der als Mitteln zum Abziehen von Dampf aus dem oberen Bereich der Rücklaufpassagen dient. Alternativ können am oberen Ende zwei entsprechende Header an einander gegenüberliegenden Seiten des Wärmetauscherblocks angeordnet sein.

Vorzugsweise weisen der Wärmetauscherblock beziehungsweise alle Wärmetauscherblöcke senkrecht zur Strömungsrichtung der Rücklaufpassagen einen rechteckigen Querschnitt auf. Der Wärmetauscherblock kann zum Beispiel quader-oder pyramidenförmig ausgebildet sein.

Die Erfindung betrifft außerdem eine Anwendung eines Rücklaufkondensators gemäß dem Patentanspruch 13.

Die Erfindung sowie weitere Einzelheiten der Erfindung werden im Folgenden anhand von in den Zeichnungen schematisch dargestellten Ausführungsbeispielen näher erläutert. Hierbei zeigen
- Figur 1: einen Längsschnitt durch eine Rücklaufkondensator in einer ersten Ausführungsform der Erfindung,
- Figur 2: einen Querschnitt in der Ebene A-A der Figur 1,
- Figuren 3 und 4: eine zweite Ausführungsform eines erfindungsgemäßen Rücklaufkondensator in Längs- beziehungsweise Querschnitt,
- Figuren 5 und 6: eine dritte Ausführungsform eines erfindungsgemäßen Rücklaufkondensator in Längs- beziehungsweise Querschnitt und
- Figur 7: Wärmetauscherblöcke mit weiteren Header-Formen.

Ein Wärmetauscherblock 1 ist im Inneren eines Druckbehälters 2 angeordnet. Er ist als gelöteter Aluminium-Plattenwärmetauscher ausgebildet und weist abwechselnd Rücklaufpassagen und Kältemittelpassagen auf, die nicht im Einzelnen dargestellt sind.

Die Kältemittelpassagen funktionieren bei dem Ausführungsbeispiel als Umlaufverdampfer. Ein flüssiges Kältemittel wird über einen Stutzen 4 in den Zwischenraum 3 zwischen Druckbehälter 3 und Wärmetauscherblock 1 eingeführt und bildet dort ein Flüssigkeitsbad. Über seitliche Öffnungen der Kältemittelpassagen strömt Flüssigkeit 5 aus dem Bad in die Kältemittelpassagen ein. Durch den Thermosiphon-Effekt wird ein Zwei-Phasen-Gemisch in den Kältemittelpassagen nach oben geführt und tritt an der Oberseite des Wärmetauscherblocks 1 aus den dort offenen Kältemittelpassagen aus. Gasförmiges Kältemittel 6 wird über eine Gasleitung 7 abgezogen, flüssig verbliebenes Kältemittel 8 fällt in das Flüssigkeitsbad zurück.

Die Rücklaufpassagen sind an ihrem unteren Ende offen und kommunizieren mit einem Header, der unterhalb des Wärmetauscherblocks 1 angeordnet ist. Der Header weist vier rechteckige Seitenwände 9, 10, 11, 12 und einen Boden 13 auf. Die Grundfläche des Bodens 13 bildet den Boden einer Phasentrenneinrichtung und weist in dem Beispiel vier Gasdurchtrittsöffnungen 14, 15, 16, 17 auf. Die Gasdurchtrittsöffnungen sind an ihrer Oberseite mit je einer Umrandung 18 zum Aufstauen von Flüssigkeit versehen. Sie verhindern insbesondere, dass auf dem Boden aufgestaute Flüssigkeit in die Gasdurchtrittsöffnung gelangt. Über ein Ablaufrohr 19 kann die aufgestaute Flüssigkeit abfließen. Oberhalb der Gasdurchtrittsöffnungen ist jeweils eine Abdeckung 20, 21 angeordnet. Die Grundfläche des Bodens 13 stellt den zentralen Bereich einer Bodenplatte dar, deren peripherer Bereich 31 den zentralen Bereich umschließt und den Druckbehälter 2 nach unten abschließt.

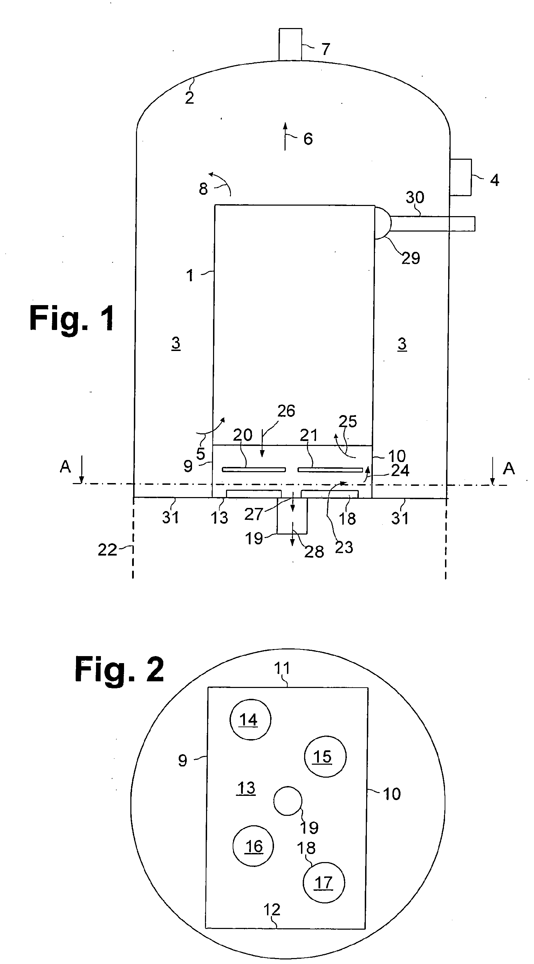

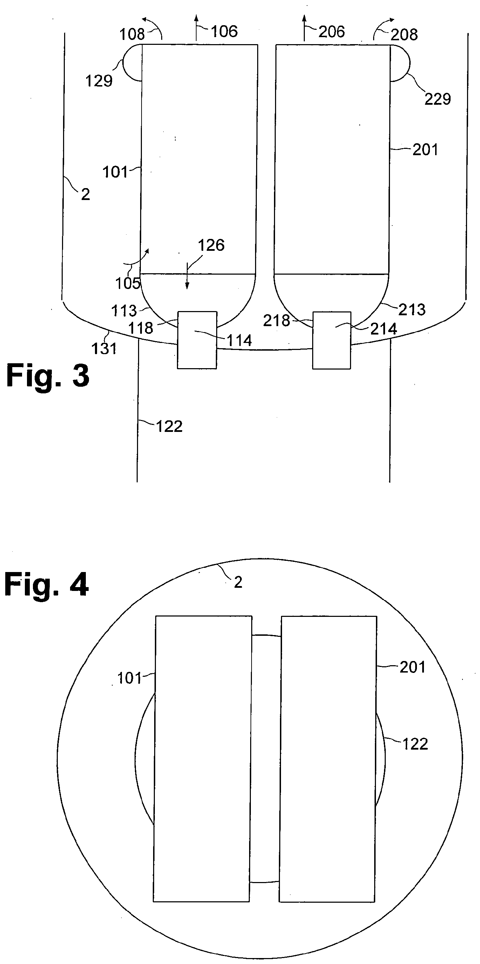

Der Rücklaufkondensator ist unmittelbar auf dem Kopf einer Trennkolonne angeordnet. Die Kolonnenwand 22 ist in Figur 1 durch gestrichelte Linien angedeutet. Dampf 23 aus dem Kolonnenkopf strömt über die Gasdurchtrittsöffnungen, wird von den Abdeckungen 20, 21 umgelenkt (24) und strömt schließlich in die Rücklaufpassagen ein (25). In den Rücklaufpassagen gebildete Flüssigkeit (26) tritt aus deren unterem Ende aus, trifft gegebenenfalls auf eine der Abdeckungen 20, 21, wird auf dem Boden 13 aufgestaut und fließt schließlich über das Ablaufrohr 19 ab (27, 28). Der gasförmig verbliebene Anteil wird oben über einen oder mehrere seitliche Header 29 und ein Gasabführrohr 30 aus den Rücklaufpassagen abgezogen. Abweichend von der Darstellung in der Zeichnung können am oberen Ende auch zwei oder mehr Header zum Abführen des gasförmig verbliebenen Anteils angeordnet sein.
In der Ausführungsform der Figuren 3 und 4 weist der Rücklaufkondensator zwei Wärmetauscherblöcke 101, 201 auf. Die Bauteile, die denjenigen der Figur 1 entsprechen sind auch mit entsprechenden Bezugszeichen (gegebenenfalls plus 100 beziehungsweise plus 200) versehen. Einige Einzelheiten wie der Deckel des Druckbehälters 2, die Abdeckungen (20, 21 in Figur 1) der Gasdurchtrittsöffnungen 114, 214 oder die Ablaufrohre (19 in Figur 1) sind nicht dargestellt.

Die Böden 113, 213 der als Phasentrenneinrichtung ausgebildeten Header sind hier nicht eben wie in Figur 1, sondern gewölbt ausgeführt. Der Druckbehälter 2 wird in dieser Ausführungsform mittels einer ebenfalls gewölbten unteren Abdeckung 131 nach unten abgeschlossen, die unabhängig von den Böden 113, 213 der Phasentrenneinrichtung ist. Dies ist hier erforderlich, weil die beiden Wärmetauscherblöcke 101, 210 einen Querschnitt aufweisen, der über den Querschnitt des darunter angeordneten Behälters 122, beispielsweise einer Trennkolonne, hinausragt.

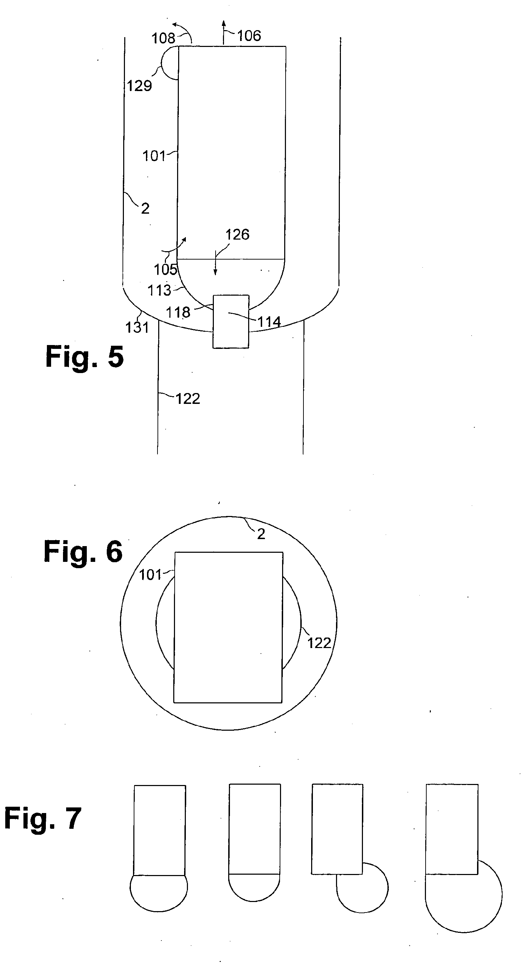

Das Ausführungsbeispiel der Figuren 5 und 6 unterscheidet sich hiervon darin, dass der Rücklaufkondensator einen einzigen Wärmetauscherblock aufweist. Ansonsten gilt das oben Gesagte analog.

## Patentansprüche

1. Rücklaufkondensator mit mindestens einem Wärmetauscherblock (1), der Rücklaufpassagen und Kältemittelpassagen aufweist, mit einem Druckbehälter (2), der den Wärmetauscherblock (1) oben und seitlich umschließt, wobei zwischen dem Wärmetauscherblock und der Druckbehälterwand ein seitlicher Zwischenraum (3) angeordnet ist, mit Mitteln (14, 15, 16, 17) zum Einführen von Dampf in den unteren Bereich der Rücklaufpassagen, mit Mitteln (19) zum Abführen von Flüssigkeit aus dem unteren Bereich der Rücklaufpassagen, mit Mitteln (29, 30) zum Abziehen von Dampf aus dem oberen Bereich der Rücklaufpassagen und mit Mitteln zum Einführen von Kältemittel in die Kältemittelpassagen, wobei die Rücklaufpassagen nicht offen zu dem Zwischenraum (3) zwischen Druckbehälter (2) und Wärmetauscherblock (1) sind, wobei die Rücklaufpassagen an ihrem unteren Ende mit dem Header kommunizieren, der unterhalb des Wärmetauscherblocks (1) angeordnet ist und eine Phasentrenneinrichtung aufweist.

2. Rücklaufkondensator nach Anspruch 1, **dadurch gekennzeichnet, dass** die Phasentrenneinrichtung einen Boden (13) aufweist.

3. Rücklaufkondensator nach Anspruch 2, **dadurch gekennzeichnet, dass** der Boden mindestens eine Gasdurchtrittsöffnung (14, 15, 16, 17) enthält und die Gasdurchtrittsöffnung an ihrer Oberseite mit einer Umrandung (18) zum Aufstauen von Flüssigkeit versehen ist.

4. Rücklaufkondensator nach Anspruch 3, **dadurch gekennzeichnet, dass** der freie Querschnitt der Gasdurchtrittsöffnung beziehungsweise die Summe der freien Querschnitte aller Gasdurchtrittsöffnungen (14, 15, 16, 17) der Phasentrenneinrichtung weniger als 50 %, insbesondere weniger als 30 %, insbesondere weniger als 25 % der unteren Stirnfläche des Wärmetauscherblocks (1) beträgt.

5. Rücklaufkondensator nach einem der Anspruch 2 bis 4, **gekennzeichnet durch** eine Bodenplatte die einen zentralen Bereich, der die Grundfläche des Bodens (13) bildet und mit einem peripheren Bereich (31), der den zentralen Bereich umschließt und den Druckbehälter (2) nach unten abschließt.

6. Rücklaufkondensator nach einem der Ansprüche 2 bis 5, **dadurch gekennzeichnet, dass** die Phasentrenneinrichtung mindestens ein Ablaufrohr (19) für auf dem Boden (13) angestaute Flüssigkeit aufweist.

7. Rücklaufkondensator nach einem der Ansprüche 3 bis 6, **dadurch gekennzeichnet, dass** oberhalb der Gasdurchtrittsöffnung (14, 15, 16, 17) eine Abdeckung (20, 21) mit Abstand zum Boden (13) angeordnet ist, die mindestens einen Teil der Querschnittsfläche der Gasdurchtrittsöffnung überdeckt.

8. Rücklaufkondensator nach einem der Ansprüche 3 bis 7, **dadurch gekennzeichnet, dass** der freie Querschnitt der Gasdurchtrittsöffnung beziehungsweise die Summe der freien Querschnitte aller Gasdurchtrittsöffnungen (14, 15, 16, 17) der Phasentrenneinrichtung mindestens 5 %, insbesondere mindestens 10 %, insbesondere mindestens 15 % der unteren Stirnfläche des Wärmetauscherblocks (1) beträgt.

9. Rücklaufkondensator nach einem der Ansprüche 1 bis 8, **dadurch gekennzeichnet, dass** der Header ebene, insbesondere rechteckige Seitenwände (9, 10, 11, 12) aufweist, die mit den unteren Kanten des Wärmetauscherblocks (1) verbunden sind.

10. Rücklaufkondensator nach einem der Ansprüche 2 bis 9, **dadurch gekennzeichnet, dass** der Header einen Boden aufweist, der auch den Boden der Phasentrenneinrichtung bildet.

11. Rücklaufkondensator nach einem der Ansprüche 1 bis 10, **dadurch gekennzeichnet, dass** die Mittel zum Einführen von Kältemittel in die Kältemittelpassagen als seitliche Öffnungen des Wärmetauscherblocks (1) ausgebildet sind, über welche die Kältemittelpassagen mit dem Zwischenraum (3) zwischen Druckbehälter (2) und Wärmetauscherblock (1) kommunizieren.

12. Rücklaufkondensator nach einem der Ansprüche 1 bis 11, **dadurch gekennzeichnet, dass** der Wärmetauscherblock beziehungsweise alle Wärmetauscherblöcke senkrecht zur Strömungsrichtung der Rücklaufpassagen einen rechteckigen Querschnitt aufweisen.

13. Anwendung eines Rücklaufkondensators nach einem der Ansprüche 1 bis 11 als Kopfkondensator einer Trennkolonne.

## Claims

1. Reflux condenser with at least one heat exchanger block (1) which has reflux passages and refrigerant passages, with a pressure container (2) which encloses the heat exchanger block (1) at the top and laterally, wherein a lateral intermediate space (3) is arranged between the heat exchanger block and the pressure container wall, with means (14, 15, 16, 17) for introducing vapour into the lower region of the reflux passages, with means (19) for conducting away liquid from the lower region of the reflux passages, with means (29, 30) for drawing vapour out of the upper region of the reflux passages, and with means for introducing refrigerant into the refrigerant passages, wherein the reflux passages are not open to the intermediate space (3) between pressure container (2) and heater exchanger block (1), **characterized in that** the reflux passages communicate at their lower end with the header which is arranged below the heat exchanger block (1) and has a phase-separating device.

2. Reflux condenser according to Claim 1, **characterized in that** the phase-separating device has a base (13).

3. Reflux condenser according to Claim 2, **characterized in that** the base contains at least one gas passage opening (14, 15, 16, 17) and the gas passage opening is provided on its upper side with a border (18) for backing up liquid.

4. Reflux condenser according to Claim 3, **characterized in that** the free cross section of the gas passage opening or the sum of the free cross sections of all of the gas passage openings (14, 15, 16, 17) of the phase-separating device amounts to less than 50%, in particular less than 30%, in particular less than 25%, of the lower end surface of the heat exchanger block (1).

5. Reflux condenser according to one of Claims 2 to 4, **characterized by** a baseplate which has a central region which forms the base surface of the base (13), and with a peripheral region (31) which surrounds the central region and downwardly closes the pressure container (2).

6. Reflux condenser according to one of Claims 2 to 5, **characterized in that** the phase-separating device has at least one discharge pipe (19) for liquid backed up on the base (13).

7. Reflux condenser according to one of Claims 3 to 6, **characterized in that**, above the gas passage opening (14, 15, 16, 17), a covering (20, 21) is arranged at a distance from the base (13) and covers at least part of the cross-sectional area of the gas passage opening.

8. Reflux condenser according to one of Claims 3 to 7, **characterized in that** the free cross section of the gas passage opening or the sum of the free cross sections of all of the gas passage openings (14, 15, 16, 17) of the phase-separating device amounts to at least 5%, in particular at least 10%, in particular at least 15%, of the lower end surface of the heat exchanger block (1).

9. Reflux condenser according to one of Claims 1 to 8, **characterized in that** the header has planar, in particular rectangular side walls (9, 10, 11, 12) which are connected to the lower edges of the heat exchanger block (1).

10. Reflux condenser according to one of Claims 2 to 9, **characterized in that** the header has a base which also forms the base of the phase-separating device.

11. Reflux condenser according to one of Claims 1 to 10, **characterized in that** the means for introducing refrigerant into the refrigerant passages are designed as lateral openings of the heat exchanger block (1), via which the refrigerant passages communicate with the intermediate space (3) between pressure vessel (2) and heat exchanger block (1).

12. Reflux condenser according to one of Claims 1 to 11, **characterized in that** the heat exchanger block or all of the heat exchanger blocks has or have a rectangular cross section perpendicularly to the direction of flow of the reflux passages.

13. Use of a reflux condenser according to one of Claims 1 to 11 as the top condenser of a separating column.

## Revendications

1. Condenseur à reflux comprenant au moins un bloc échangeur de chaleur (1), qui présente des passages de reflux et des passages d'agent frigorigène, un récipient sous pression (2) qui entoure en haut et sur les côtés le bloc échangeur de chaleur (1), un espace intermédiaire latéral (3) étant disposé entre le bloc échangeur de chaleur et la paroi du récipient sous pression, des moyens (14, 15, 16, 17) pour introduire de la vapeur dans la région inférieure des passages de reflux, des moyens (19) pour évacuer du liquide hors de la région inférieure des passages de reflux, des moyens (29, 30) pour prélever de la vapeur hors de la région supérieure des passages de reflux et des moyens pour introduire un agent frigorigène dans les passages d'agent frigorigène, les passages de reflux n'étant pas ouverts vers l'espace intermédiaire (3) entre le récipient sous pression (2) et le bloc échangeur de chaleur (1), **caractérisé en ce que** les passages de reflux, au niveau de leur extrémité inférieure, communiquant avec le collecteur qui est disposé en dessous du bloc échangeur de chaleur (1) et qui présente un dispositif de séparation de phases.

2. Condenseur à reflux selon la revendication 1, **caractérisé en ce que** le dispositif de séparation de phases présente un fond (13).

3. Condenseur à reflux selon la revendication 2, **caractérisé en ce que** le fond contient au moins une ouverture de passage de gaz (14, 15, 16, 17) et l'ouverture de passage de gaz est pourvue au niveau de son côté supérieur d'une bordure (18) pour retenir le liquide.

4. Condenseur à reflux selon la revendication 3, **caractérisé en ce que** la section transversale libre de l'ouverture de passage de gaz ou la somme des sections transversales libres de toutes les ouvertures de passage de gaz (14, 15, 16, 17) du dispositif de séparation de phases est inférieure à 50 %, en particulier inférieure à 30 %, en particulier inférieure à 25 % de la surface frontale inférieure du bloc échangeur de chaleur (1)

5. Condenseur à reflux selon l'une quelconque des revendications 2 à 4, **caractérisé par** une plaque de fond qui présente une région centrale qui forme la surface de base du fond (13) et comprenant une région périphérique (31) qui entoure la région centrale et qui ferme vers le bas le récipient sous pression (2).

6. Condenseur à reflux selon l'une quelconque des revendications 2 à 5, **caractérisé en ce que** le dispositif de séparation de phases présente au moins un tube d'écoulement (19) pour le liquide accumulé au fond (13).

7. Condenseur à reflux selon l'une quelconque des revendications 3 à 6, **caractérisé en ce qu'**au-dessus de l'ouverture de passage de gaz (14, 15, 16, 17) est disposé un recouvrement (20, 21) à distance du fond (13), qui recouvre au moins une partie de la surface en section transversale d'ouverture de passage de gaz.

8. Condenseur à reflux selon l'une quelconque des revendications 3 à 7, **caractérisé en ce que** la section transversale libre de l'ouverture de passage de gaz ou la somme des sections transversales libres de toutes les ouvertures de passage de gaz (14, 15, 16, 17) du dispositif de séparation de phases vaut au moins 5 %, en particulier au moins 10 %, en particulier au moins 15 % de la surface frontale inférieure du bloc échangeur de chaleur (1).

9. Condenseur à reflux selon l'une quelconque des revendications 1 à 8, **caractérisé en ce que** le collecteur présente des parois latérales planes, en particulier rectangulaires (9, 10, 11, 12), qui sont connectées aux arêtes inférieures du bloc échangeur de chaleur (1).

10. Condenseur à reflux selon l'une quelconque des revendications 2 à 9, **caractérisé en ce que** le collecteur présente un fond qui forme également le fond du dispositif de séparation de phases.

11. Condenseur à reflux selon l'une quelconque des revendications 1 à 10, **caractérisé en ce que** les moyens pour introduire l'agent frigorigène dans les passages d'agent frigorigène sont réalisés sous forme d'ouverture latérale du bloc échangeur de chaleur (1), par le biais desquelles les passages d'agent frigorigène communiquent avec l'espace intermédiaire (3) entre le récipient sous pression (2) et le bloc échangeur de chaleur (1).

12. Condenseur à reflux selon l'une quelconque des revendications 1 à 11, **caractérisé en ce que** le bloc échangeur de chaleur ou tous les blocs échangeurs de chaleur présentent une section transversale rectangulaire perpendiculairement à la direction d'écoulement des passages de reflux.

13. Utilisation d'un condenseur à reflux selon l'une quelconque des revendications 1 à 11 en tant que condenseur de tête d'une colonne de séparation.
